# EUROPEAN PATENT APPLICATION

(11) **EP 4 806 640 A1**
(43) Date of publication of application: **16.09.2026**
(21) Application number: 25163689.0
(22) Date of filing: 14.03.2025
(51) Int. Cl.: B32B 38/00, B29B 17/02, C08J 11/24, B29B 17/00, B26D 7/18, B32B 5/20

(54) **METHOD FOR SAWING OR MILLING RIGID INSULATION PANELS**

(71) Applicant: Unilin, BV, 8710 Wielsbeke (BE)
(72) Inventor: Beerens, Brecht, 8710 Wielsbeke (BE); De Smet, Stefan, 8710 Wielsbeke (BE)
(74) Representative: Unilin Technologies

(57) **Abstract**

A method for sawing or milling coupling parts onto rigid insulation panels (1) comprises the steps of
a) providing a rigid insulation panel (1) comprising a rigid foam core (4) between a first facer (2) and a second facer (3), wherein the rigid foam core (4) is a rigid isocyanurate foam core or a rigid polyurethane foam core;
b) sawing or milling at a first edge (6) of the rigid insulation panel (1) thereby removing a section of the first facer (2) as well as material from the foam core (4); and evacuating the sawing or milling dust in a first evacuation stream;
c) sawing or milling at the first edge (6) of the rigid insulation panel (1) into the rigid foam core (4) without sawing or milling in the first facer (2) nor in the second facer (3); and evacuating the sawing or milling dust in a second evacuation stream.

The dust from the second evacuation stream is collected for recycling purposes without being combined nor mixed with dust from the first evacuation stream.

## Description

The invention relates to a method for milling or sawing rigid insulation panels, such as rigid isocyanurate thermal insulation panels or rigid polyurethane thermal insulation panels.

Rigid isocyanurate thermal insulation panels and rigid polyurethane insulation panels are manufactured as mother boards which are then milled or sawn to smaller panels.

Rigid isocyanurate thermal insulation panels and rigid polyurethane thermal insulation panels can be provided with coupling parts for facilitating their installation, e.g. as insulation of walls in the construction of buildings.

WO2023/079467A1 discloses such rigid foam thermal insulation panels, provided with coupling parts having the shape of a tongue and a corresponding groove. The coupling parts are provided by means of milling operations.

WO2020/076529A1 and WO2020/076539A1 describe recipes for the production of rigid polyurethane foams. The recipes comprise polyol, a polyisocyanate, a blowing agent, surfactants, and a catalyst.

It is an object of the invention to provide an improved method for sawing or milling rigid thermal insulation panels. It is a specific object of the method of the invention to provide an improved method for providing coupling parts onto rigid thermal insulation panels.

The method of the invention is a method for sawing or milling rigid insulation panels. The method of the invention comprises the steps of
a) providing a rigid insulation panel comprising a rigid foam core between a first facer and a second facer, wherein the rigid foam core is a rigid isocyanurate foam core or a rigid polyurethane foam core;
b) sawing or milling at a first edge of the rigid insulation panel thereby removing a section of the first facer as well as material from the foam core; and evacuating the sawing or milling dust in a first evacuation stream; and
c) sawing or milling at the first edge of the rigid insulation panel into the rigid foam core without sawing or milling in the first facer nor in the second facer; and evacuating the sawing or milling dust in a second evacuation stream.

The dust from the second evacuation stream is collected for recycling purposes without being combined nor mixed with dust from the first evacuation stream.

The method of the invention has the benefit that
- Big size rigid insulation panels (known as motherboards) can be sawn or milled in smaller size rigid insulation panels in a way such that dust from the rigid foam core is collected that does not comprise facer particles; or
- Edges of rigid insulation panels can be milled or sawn, e.g. to set the size of the rigid insulation panel, or to prepare the edges of the rigid insulation panels for milling coupling parts onto them, in a way such that dust from the rigid foam core is collected that does not comprise facer particles; or
- Coupling parts can be milled at edges of rigid isocyanurate foam panels or of rigid polyurethane foam panels in a way such that dust from the rigid foam core is collected that does not comprise facer particles.

This is advantageous, as the dust stream not comprising facer particles - the second evacuation stream - consists only of isocyanurate dust or polyurethane dust. As it is a homogeneous material stream, it can be recycled easily.

The first evacuation stream will comprise facer particles, even facer particles adhered to foam dust, as well as foam dust. It has been shown to be difficult to separate pure foam dust from a waste stream comprising also facer particles, whether or not these facer particles are adhered to foam dust. Therefore, such dust comprising facer particles is evacuated separately in the method of the invention and is not mixed with dust from the second evacuation stream.

Therefore, the method of the invention has the benefit of facilitating recycling of foam dust created when sawing or milling (e.g. when milling coupling parts onto) rigid isocyanurate foam panels or onto rigid polyurethane foam panels.

The first facer and the second facer can be identical in composition or can differ in composition.

The first facer and the second facer can be identical in composition, except for differences in printing.

The first facer and/or the second facer can comprise an aluminum foil.

The first facer and/or the second facer preferably is/are a laminate comprising one or more of at least an aluminum foil, at least one paper sheet (preferably a Kraft paper sheet) and at least one polymer film.

The first facer and/or the second facer can be a laminate of at least 100 micrometer thick, preferably of less than 300 micrometer thick.

The first facer and/or the second facer may consist of an aluminum foil, preferably of a coated aluminum foil. The aluminum foil providing the first facer and/or the second facer can comprise a protective coating at the side opposite to the side onto which the foaming has occurred. The aluminum foil providing the first facer and/or the second facer can comprise a coating at the side onto which the foaming has occurred, for improving the adhesion of the rigid foam in the foaming process. This coating can be a polyurethane coating.

Step c) is preferably performed after performing step b).

A preferred method is characterized in that the method comprises the step of sawing or milling at the first edge of the rigid insulation panel thereby removing a section of the second facer as well as material from the foam core; and evacuating the sawing or milling dust in an evacuation stream and without mixing it with dust from the second evacuation stream.

The step of sawing or milling at the first edge of the rigid insulation panel thereby removing a section of the second facer as well as material from the foam core; and evacuating the milling dust in an evacuation stream separate from the second evacuation stream is preferably performed before step c).

Such embodiment facilitates the separate evacuation of dust streams; and therefore, facilitates the collection of the dust without facer particles for recycling purposes.

The method preferably is a method for milling coupling parts onto the rigid insulation panel. Such coupling parts can e.g. provided by a tongue and a corresponding groove.

A preferred method is characterized in that step c) comprises one or more than one milling operation; wherein in step c) the first edge is provided with a non-flat profiled edge providing a coupling part. The coupling part can be provided for coupling the rigid insulation panel to another such panel, e.g. when insulating a wall.

In a preferred embodiment of the method of the invention, the steps b) and c) are performed such that on the front face of the insulation panel nor on the back face of the insulation panel rigid foam core is exposed at the first edge.

Such embodiment is favorable, as it reduces loss of blowing agent out of the closed cell foam of the rigid foam core. Less loss of blowing agent means that the thermal insulation properties are better maintained over time.

In a preferred embodiment of the method of the invention, the steps b) and c) are performed such that on the front face of the insulation panel, and/or on the back face of the insulation panel, rigid foam core is exposed at the first edge in proximal direction of the panel over a distance from the first edge.

Such embodiment facilitates the milling process, as less tight tolerances need to be maintained in the milling operations in steps b) and c).

A preferred method according to the invention is characterized in that the method comprises the steps of
d) sawing or milling at a second edge of the rigid insulation panel thereby removing a section of the first facer and/or of the second facer as well as material from the foam core; and evacuating the sawing or milling dust in a third evacuation stream; and
e) sawing or milling at the second edge of the rigid insulation panel into the rigid foam core without sawing or milling in the first facer nor in the second facer; and evacuating the sawing or milling dust in a fourth evacuation stream.

The dust from the fourth evacuation stream is collected for recycling purposes without being combined nor mixed with dust from the first evacuation stream nor with dust from the third evacuation stream. The rigid insulation panel is rectangular. The second edge is provided opposite to the first edge.

In a preferred embodiment, step c) comprises one or more than one milling operation; wherein in step c) a first coupling part is milled at the first edge of the rigid insulation panel. Step e) comprises one or more than one milling operation; wherein in step e) a second coupling part is milled at the second edge of the rigid insulation panel. The first coupling part is provided for coupling with the second coupling part of another such rigid insulation panel.

The combination of the first coupling part and the second coupling part can be configured for providing a tongue and groove coupling, or can be configured for providing an **L-**with and inverted L-coupling.

A preferred method is characterized in that steps d) and e) are performed such that on the front face of the insulation panel nor on the back face of the insulation panel rigid foam core is exposed at the second edge.

Such embodiment is favorable, as it reduces loss of blowing agent out of the closed cell foam of the rigid foam core. Less loss of blowing agent means that the thermal insulation properties are better maintained over time.

A preferred method is characterized in that steps d) and e) are performed such that on the front face of the insulation panel, and/or on the back face of the insulation panel, rigid foam core is exposed at the second edge in proximal direction of the panel over a distance from the second edge.

Such embodiment facilitates the milling process, as less tight tolerances need to be maintained in the milling operations in steps d) and e).

A preferred method is characterized in that the dust from the second evacuation stream and optionally the dust from the optional fourth evacuation stream is milled or ground.

This way, the dust from the second evacuation stream and optionally the dust from the optional fourth evacuation stream is reduced in size, and can be made more uniform in size. This operation makes the dust better suitable for being dispersed in a liquid foam formulation for producing a rigid isocyanurate or a rigid polyurethane foam panel; thereby facilitating the recycling of the evacuated dust.

Preferably, the dust from the second evacuation stream and optionally the dust from the optional fourth evacuation stream is milled or ground to particles having S50 particle size less than 70 micrometer, and preferably less than 60 micrometer.

More preferably, the dust from the second evacuation stream and optionally the dust from the optional fourth evacuation stream is milled or ground to particles having S90 particle size less than 80 micrometer.

The particle size is determined by laser light diffraction performed in accordance with ISO 13320:2020. The S50 particle size is determined in the particle size distribution according to volume obtained by the laser light diffraction as the particle size at which 50% by volume of the particles are smaller. The S90 particle size is determined in the particle size distribution according to volume as the particle size at which 90% by volume of the particles are smaller.

The method according to the invention can be performed at the first pair of opposite edges of a rectangular rigid insulation panel, and optionally also at the second pair of opposite edges of rectangular rigid insulation panels.

A preferred method is characterized in that at least one edge of the rigid insulation panel comprises a side facer (e.g. a side paper); wherein at the first edge a sawing or milling operation is performed sawing or milling away side paper such that step c) is performed without sawing or milling through side paper; wherein the dust from the sawing or milling operation sawing or milling away side paper is evacuated without being combined nor mixed with dust from the second evacuation stream nor mixed with dust from the optional fourth evacuation stream.

This way, dust can be recycled without it comprising facer particles nor particles from the side facer (e.g. the side paper). The side facer (e.g. the side paper) can have been used in the production of the rigid insulation panel to prevent the foam from expanding beyond boundaries at side edges in the foaming process.

The step wherein at the first edge a sawing or milling operation is performed sawing or milling away side paper such that step c) is performed without sawing or milling through side paper, can be performed at step b).

A preferred method according to the invention is characterized in that the dust from the second evacuation stream and optionally the dust from the optional fourth evacuation stream is dispersed in a liquid foam formulation for producing a rigid isocyanurate or a rigid polyurethane foam panel.

This way, a closed circuit can be established in which the dust generated from milling in the rigid foam core is used in manufacturing such rigid foam core. This dust that is used in manufacturing the rigid foam core does not comprise facer particles. Therefore, no separation process is required and a high quality rigid insulation panel can be manufactured.

Preferably, between 1 and 3 parts by weight of dust originating from sawing or milling in the rigid foam core is added to the liquid foam formulation used for producing a rigid isocyanurate or a rigid polyurethane foam panel.

Such additions of dust originating from milling in the rigid foam core provides optimum results in manufacturing the rigid foam panel and in terms of insulation and mechanical properties of the rigid foam panel.

Preferably, the dust is added to a polyol mixture before mixing the polyol mixture with polyisocyanate for producing the liquid foam formulation. Such embodiments provide better properties of the resulting rigid insulation panel.

With the intention of better showing the characteristics of the invention, hereafter, as an example without any limitative character, preferred embodiments are described, with reference to the accompanying drawings, wherein:
figure 1 shows a rigid insulation panel as can be used in the method of the invention;
figure 2 shows a cross section of the panel of figure 1 according to II - II;
figure 3a) and 3b) illustrate in combination an embodiment of the method according to the invention;
figure 4 shows the rigid insulation panel with coupling parts obtained in the method shown in figures 3a) and b);
figure 5a) and 5b) illustrate in combination an embodiment of the method according to the invention;
figure 6 shows the rigid insulation panel with coupling parts obtained in the method shown in figure 5a) and b);
figures 7 and 8 show rigid insulation panels with coupling parts as can be obtained according to the method according to the invention;
figures 9a) and b) illustrate an embodiment of the method of the invention in which a side facer is milled away; and
figure 10a) and b) illustrate an embodiment of the method of the invention in which a side facer is milled away.

The reference numerals have the same meaning in the different figures.

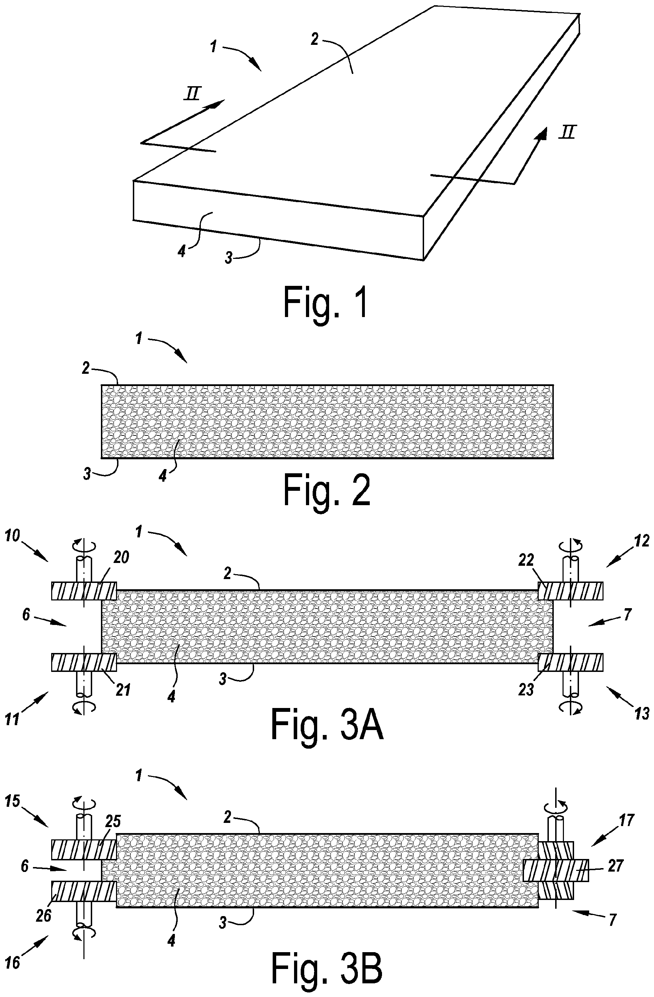

Figure 1 shows a rigid insulation panel 1 as can be used in the method of the invention. The rigid insulation panel 1 is rectangular. The rigid insulation panel 1 comprises a rigid foam core 4 between a first facer 2 and a second facer 3. The rigid foam core 4 is a rigid isocyanurate foam core or a rigid polyurethane foam core.

Figure 2 shows a cross section of the rigid insulation panel 1 of figure 1 according to II - II of figure 1.

Figures 3a) and 3b) illustrate in combination an embodiment according to the invention. A rigid insulation panel 1 as in figure 1 is provided. The rigid insulation panel comprises a rigid foam core 4 between a first facer 2 and a second facer 3. The rigid insulation panel has a first edge 6 and a second edge 7.

Figure 3a) shows that milling operations 10, 11, 12 and 13 are performed on the first edge 6 and on the second edge 7 of the rigid insulation panel 1.

Milling operation 10 is performed using a milling tool 20 at the first edge 6 of the rigid insulation panel 1 thereby removing a section of the first facer 2 as well as material from the foam core 4. The milling dust from this milling operation 10 is evacuated in a first evacuation stream (not shown in the figure).

Milling operation 11 is performed using a milling tool 21 at the first edge 6 of the rigid insulation panel 1 thereby removing a section of the second facer 3 as well as material from the foam core 4. The milling dust from this milling operation 11 is evacuated in the same first evacuation stream (not shown in the figure).

Milling operation 12 is performed using a milling tool 22 at the second edge 7 of the rigid insulation panel 1 thereby removing a section of the first facer 2 as well as material from the foam core 4. The milling dust from this milling operation 12 is evacuated (not shown in the figure).

Milling operation 13 is performed using a milling tool 23 at the second edge 7 of the rigid insulation panel 1 thereby removing a section of the second facer 3 as well as material from the foam core 4. The milling dust from this milling operation 13 is evacuated (not shown in the figure).

The milling dust obtained in milling operations 10, 11, 12 and 13 comprises dust from the foam core, but also facer particles, whether or not bonded to foam core dust. The dust obtained in milling operations 10, 11, 12 and 13 is discarded.

Figure 3b) shows that milling operations 15, 16 and 17 are performed after milling operations 10, 11, 12 and 13 have been performed.

Milling operations 15 and 16 are performed on the first edge 6 using milling tools 25 and 26 respectively. Milling operations 15 and 16 mill exclusively in the foam core 4; and not in the first facer 2 nor in the second facer 3.

Milling operation 17 is performed at the second edge 7 using milling tool 27. Milling operation 17 mills exclusively in the foam core 4; and not in the first facer 2, nor in the second facer 3.

The milling dust from milling operations 15, 16 and 17 is evacuated and collected, separately from the milling dust from milling operations 10, 11, 12 and 13. The milling dust from milling operations 15, 16, 17 does not comprise facer particles and can be used for recycling, e.g. by dispersing it in the liquid foam formulation used in the production of the foam core of the rigid insulation panels, preferably after reducing its size in a milling or grinding operation. This way, a circular recycling system is obtained: rigid foam dust milled in the production of rigid insulation foam panels is reused in the production of new rigid insulation foam panels.

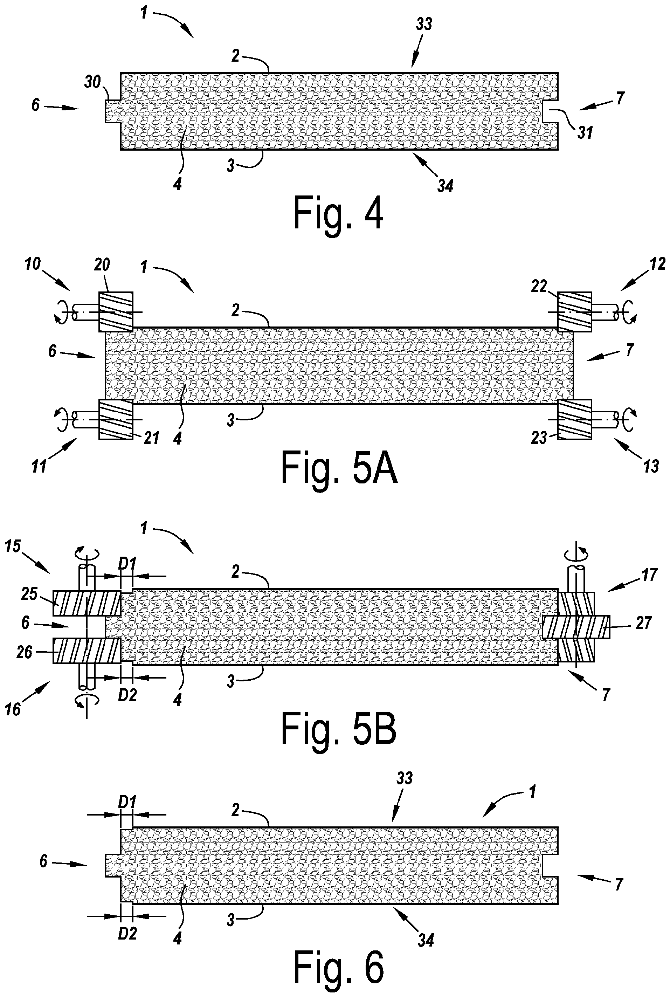

Figure 4 shows the rigid insulation panel with coupling parts obtained in the method shown in figures 3a) and b). Through the milling operations 10, 11, 12, 13, 15, 16 and 17, coupling parts have been provided at the first edge 6 and the second edge 7 of the rigid insulation panel. In the example, the coupling part at the first edge 6 is provided by a tongue 30 and the corresponding coupling part at the second edge 7 of the insulation panel is provided by a groove 31. This way, the rigid insulation panels obtained in the method can be coupled to each other by means of a tongue and groove connection, e.g. when using the insulation panels made according to the method of the invention for the thermal insulation of a wall.

The milling operations in the method shown in figures 3a) and 3b) have been executed such that at the first edge 6 nor at the second edge 7 rigid foam core 4 is exposed at the front face 33 (which carries the first facer 2) nor at the back face 34 (which carries the second facer 3).

Figures 5a) and 5b) illustrate in combination an embodiment according to the invention. A rigid insulation panel 1 as in figure 1 is provided. The rigid insulation panel comprises a rigid foam core 4 between a first facer 2 and a second facer 3. The rigid insulation panel has a first edge 6 and a second edge 7.

Figure 5a) shows that milling operations 10, 11, 12 and 13 are performed at the first edge 6 and at the second edge 7.

Milling operation 10 is performed using a milling tool 20 at the first edge 6 of the rigid insulation panel 1 thereby removing a section of the first facer 2 as well as material from the foam core 4. The milling dust from this milling operation 10 is evacuated in a first evacuation stream (not shown in the figure).

Milling operation 11 is performed using a milling tool 21 at the first edge 6 of the rigid insulation panel 1 thereby removing a section of the second facer 3 as well as material from the foam core 4. The milling dust from this milling operation 11 is evacuated in the same first evacuation stream (not shown in the figure).

Milling operation 12 is performed using a milling tool 22 at the second edge 7 of the rigid insulation panel 1 thereby removing a section of the first facer 2 as well as material from the foam core 4. The milling dust from this milling operation 12 is evacuated (not shown in the figure).

Milling operation 13 is performed using a milling tool 23 at the second edge 7 of the rigid insulation panel 1 thereby removing a section of the second facer 3 as well as material from the foam core 4. The milling dust from this milling operation 13 is evacuated (not shown in the figure).

The milling dust obtained in milling operations 10, 11, 12 and 13 comprises dust from the foam core, but also facer particles, whether or not bonded to foam core dust. The dust obtained in milling operations 10, 11, 12 and 13 is discarded.

Figure 5b) shows that milling operations 15, 16 and 17 are performed, after the milling operations 10, 11, 12 and 13.

Milling operations 15 and 16 are performed on the first edge 6 using milling tools 25 and 26 respectively. Milling operations 15 and 16 mill exclusively in the foam core 4; and not in the first facer 2 nor in the second facer 3. Milling tools 25 and 26 can be integrated in one single tool.

Milling operation 17 is performed at the second edge 7 using milling tool 27. Milling operation 17 mills exclusively in the foam core 4; and not in the first facer 2, nor in the second facer 3.

The milling dust from milling operations 15, 16 and 17 is evacuated and collected, separately from the milling dust from milling operations 10, 11, 12 and 13. The milling dust from milling operations 15, 16, 17 does not comprise facer particles and can be used for recycling, e.g. by dispersing it in the liquid foam formulation used in the production of the foam core of the rigid insulation panels; preferably after milling or grinding this dust to reduce its size. This way, a circular recycling system is obtained.

The difference in the milling operations from figures 5a) and b) on the one hand and 3a) and b) on the other hand is that the milling operations from figures 5a) and b) result in it that at the first edge 6 (but not at the second edge 7) rigid foam core 4 is exposed at the front face 33 (which carries the first facer 2) as well as at the back face 34 (which carries the second facer 3) in proximal direction of the panel over respectively a distance D1 and D2. This is indicated in figure 4 showing the resulting insulation panel from the embodiment of the method of the invention of figures 3a) and b); and in figure 6 showing the resulting insulation panel from the embodiment of the method of the invention of figures 5a) and b).

Figure 6 shows the rigid insulation panel with coupling parts obtained in the method shown in figures 5a) and b). Through the milling operations 11, 12, 13, 15, 16 and 17, coupling parts have been provided at the first edge 6 and the second edge 7 of the rigid insulation panel. In the example, the coupling part at the first edge 6 is provided by a tongue 30 and the corresponding coupling part at the second edge 7 of the insulation panel is provided by a groove 31. This way, the insulation panels can be coupled to each other by means of a tongue and groove connection, e.g. when using the insulation panels made according to the invention for the thermal insulation of a wall. At the first edge 6 (but not at the second edge 7) rigid foam core 4 is exposed at the front face 33 (which carries the first facer 2) as well as at the back face 34 (which carries the second facer 3) in proximal direction of the panel over respectively a distance D1 and D2.

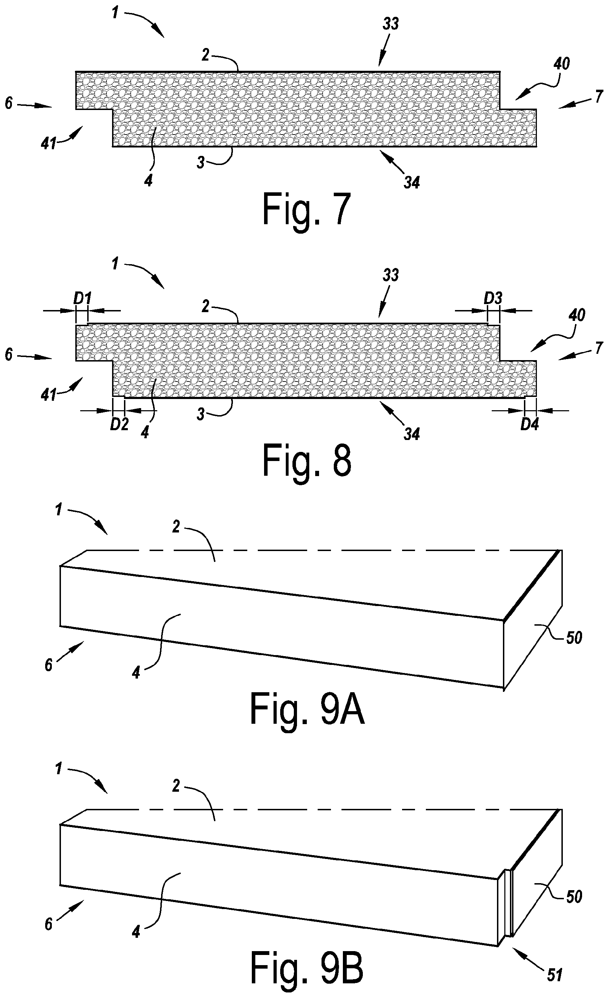

Figures 7 and 8 show two examples of rigid insulation panels with coupling parts as can be obtained in embodiments of the method according to the invention. The reference numerals have the same meaning as in the examples shown in figures 4 and 6.

Instead of coupling parts configured as a tongue and a groove, as in figures 4 and 6; the rigid insulation panels of figures 7 and 8 are provided with coupling parts in the form of an L-shape 40 and a corresponding inverted L-shape 41.

The milling operations according to the method of the invention resulting in the rigid insulation panel with coupling parts shown in figure 7 have been executed such that at the first edge 6 nor at the second edge 7 rigid foam core 4 is exposed at the front face 33 (which carries the first facer 2) nor at the back face 34 (which carries the second facer 3).

The milling operations according to the method of the invention resulting in the rigid insulation panel with coupling parts shown in figure 8 have been executed such that at the first edge 6 as well as at the second edge 7 rigid foam core 4 is exposed at the front face 33 (which carries the first facer 2) as well as at the back face 34 (which carries the second facer 3), in proximal direction of the panel over distances D1, D2, D3 and D4.

Figures 9a) and b) illustrate an embodiment of the method of the invention in which a side facer - in the example a side paper - is at least partially milled away.

Figure 9a) shows a rigid insulation panel 1. The rigid insulation panel 1 is rectangular. The rigid insulation panel 1 comprises a rigid foam core 4 between a first facer 2 and a second facer (provided at the bottom of the rigid insulation panel, and therefore not shown in figure 9a)). The rigid insulation panel comprises a first edge 6. A side edge of the rigid insulation panel 1 comprises a side paper 50.

Figure 9b) illustrates that a milling step has been performed to mill away part of the side paper 50 at the first edge 6, such that step c) of the method of the invention can be performed such that the milling dust of step c) does not comprise particles of the side paper 50. In the milling step milling away part of the side paper 50, a section 51 of the rigid insulation panel 1 is milled away This milling step performed to mill away side paper 50 at the first edge 6 can be the milling step b) of the method of the invention.

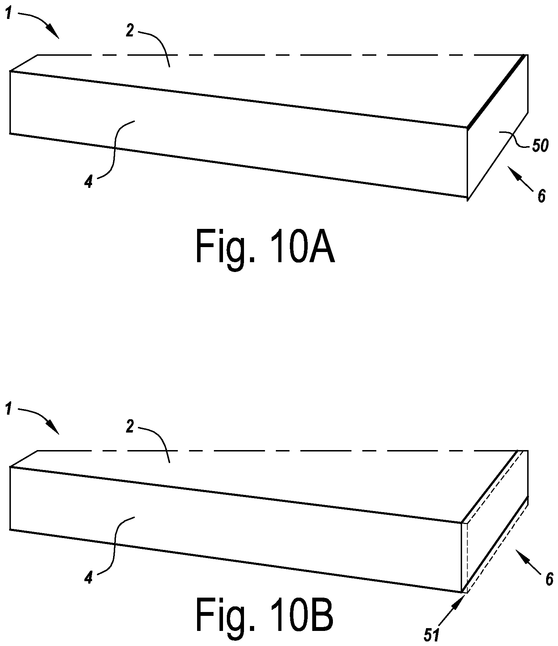

Figures 10a) and b) illustrate an embodiment of the method of the invention in which a side facer - in the example a side paper - is milled away.

Figure 10a) shows a rigid insulation panel 1. The rigid insulation panel 1 is rectangular. The rigid insulation panel 1 comprises a rigid foam core 4 between a first facer 2 and a second facer (provided at the bottom of the rigid insulation panel, and therefore not shown in figure 10a)). The rigid insulation panel comprises a first edge 6. The first edge of the rigid insulation panel 1 comprises a side paper 50.

Figure 10b) illustrates that a milling step has been performed to mill away side paper 50 at the first edge 6, such that step c) of the method of the invention can be performed such that the milling dust of step c) does not comprise particles of the side paper 50. In this milling step milling away the side paper 50, a section 51 of the rigid insulation panel 1 is milled away This milling step performed to mill away side paper 50 completely at the first edge 6 can be the milling step b) of the method of the invention, or a separate milling step.

The present invention is in no way limited to the embodiments described as examples and represented in the figures, on the contrary the invention can be realized in various forms and dimensions, without leaving the scope of the invention.

## Claims

1. Method for sawing or milling rigid insulation panels, wherein the method comprises the steps of
a) providing a rigid insulation panel comprising a rigid foam core between a first facer and a second facer, wherein the rigid foam core is a rigid isocyanurate foam core or a rigid polyurethane foam core;
b) sawing or milling at a first edge of the rigid insulation panel thereby removing a section of the first facer as well as material from the foam core; and evacuating the sawing or milling dust in a first evacuation stream;
c) sawing or milling at the first edge of the rigid insulation panel into the rigid foam core without sawing or milling in the first facer nor in the second facer; and evacuating the sawing or milling dust in a second evacuation stream;
wherein the dust from the second evacuation stream is collected for recycling purposes without being combined nor mixed with dust from the first evacuation stream.

2. Method as in claim 1, **characterized in that** the method comprises the step of sawing or milling at a first edge of the rigid insulation panel thereby removing a section of the second facer as well as material from the foam core; and evacuating the sawing or milling dust in an evacuation stream and without mixing it with dust from the second evacuation stream.

3. Method as in claim 2, **characterized in that** the step of sawing or milling at the first edge of the rigid insulation panel thereby removing a section of the second facer as well as material from the foam core; and evacuating the sawing or milling dust in an evacuation stream separate from the second evacuation stream; is performed before step c).

4. Method as in any of the preceding claims, **characterized in that** the method is a method for milling coupling parts onto the rigid insulation panel.

5. Method as in any of the preceding claims, **characterized in that** step c) comprises one or more than one milling operation; wherein in step c) the first edge is provided with a non-flat profiled edge providing a coupling part.

6. Method as in any of the preceding claims 1 - 5, **characterized in that** steps b) and c) are performed such that on the front face of the insulation panel nor on the back face of the insulation panel rigid foam core is exposed at the first edge.

7. Method as in any of the preceding claims 1 - 5, **characterized in that** steps b) and c) are performed such that on the front face of the insulation panel, and/or on the back face of the insulation panel, rigid foam core is exposed at the first edge in proximal direction of the panel over a distance from the first edge.

8. Method as in any of the preceding claims, **characterized in that** the method comprises the steps of
d) sawing or milling at a second edge of the rigid insulation panel thereby removing a section of the first facer and/or of the second facer as well as material from the foam core; and evacuating the sawing or milling dust in a third evacuation stream;
e) sawing or milling at the second edge of the rigid insulation panel into the rigid foam core without sawing or milling in the first facer nor in the second facer; and evacuating the sawing or milling dust in a fourth evacuation stream;
wherein the dust from the fourth evacuation stream is collected for recycling purposes without being combined nor mixed with dust from the first evacuation stream nor with dust from the third evacuation stream;
wherein the rigid insulation panel is rectangular and wherein the second edge is provided opposite to the first edge.

9. Method as in claim 8, **characterized in that** step c) comprises one or more than one milling operation; wherein in step c) a first coupling part is milled at the first edge of the rigid insulation panel;
and **in that** step e) comprises one or more than one milling operation; wherein in step e) a second coupling part is milled at the second edge of the rigid insulation panel; wherein the first coupling part is provided for coupling with the second coupling part of another such rigid insulation panel.

10. Method as in any of the preceding claims 8 - 9, **characterized in that** steps d) and e) are performed such that on the front face of the insulation panel nor on the back face of the insulation panel rigid foam core is exposed at the second edge.

11. Method as in any of the preceding claims 8 - 9, **characterized in that** steps d) and e) are performed such that on the front face of the insulation panel, and/or on the back face of the insulation panel, rigid foam core is exposed at the second edge in proximal direction of the panel over a distance from the second edge.

12. Method as in any of the preceding claims, **characterized in that** the dust from the second evacuation stream and optionally the dust from the optional fourth evacuation stream is milled or ground.

13. Method as in any of the preceding claims, **characterized in that** at least one edge of the rigid insulation panel comprises side paper; wherein at the first edge a sawing or milling operation is performed sawing or milling away side paper such that step c) is performed without sawing or milling through side paper; wherein the dust from the sawing or milling operation sawing or milling away side paper is evacuated without being combined nor mixed with dust from the second evacuation stream nor mixed with dust from the optional fourth evacuation stream.

14. Method as in any of the preceding claims, **characterized in that** the dust from the second evacuation stream and optionally the dust from the optional fourth evacuation stream is dispersed in a liquid foam formulation for producing a rigid isocyanurate panel or a rigid polyurethane foam panel;
preferably wherein the dust is added to a polyol mixture before mixing the polyol mixture with polyisocyanate for producing the liquid foam formulation.
